Europäisches Patentamt

European Patent Office

Office européen des brevets

(11) Veröffentlichungsnummer: **0 387 651**
**A2**

## (12) EUROPÄISCHE PATENTANMELDUNG

(21) Anmeldenummer: **90104181.4**

(22) Anmeldetag: **03.03.90**

(51) Int. Cl.5: **B29C 33/00, B29C 39/32**

(30) Priorität: **17.03.89 DE 3908819**

(43) Veröffentlichungstag der Anmeldung:
**19.09.90 Patentblatt 90/38**

(84) Benannte Vertragsstaaten:
**DE FR GB IT**

(71) Anmelder: **BAYER AG**

**D-5090 Leverkusen 1 Bayerwerk(DE)**

(72) Erfinder: **Düllings, Josef, Dipl. Ing.**
**Dorfstrasse 96**
**D-4174 Issum 2(DE)**
Erfinder: **Vente, Paul**
**Pregelstrasse 26**
**D-5090 Leverkusen 1(DE)**
Erfinder: **Klöker, Werner, Prof. Dr.**
**Deswatinesstrasse 26**
**D-4150 Krefeld 1(DE)**

(54) **Formwerkzeug zum Herstellen von flachen Körpern aus härtbaren Reaktionsharzen.**

(57) Um bei Formwerkzeugen zum Herstellen von flachen Körpern aus härtbaren Reaktionsharzen die Standzeit der zwischen einer Grundplatte (1) und einer Deckplatte (2) angeordneten elastischen Dichtung (6), durch deren Durchführungen (8) entlüftet und die Reaktionsharzmasse eingebracht wird, zu erhöhen und das Entlüften und Füllen zu beschleunigen, gestaltet man die Durchführungen (8) als stationäre Kapillarrohre (9), welche teilweise in die Dichtung (6) hineinragen und in welche sich jeweils ein in den Formhohlraum (3) mündender Kanal (10) anschließt, und sieht in die Kanäle einschiebbare Verschlußnadeln (13) vor.

FIG.1

## Formwerkzeug zum Herstellen von flachen Körpern aus härtbaren Reaktionsharzen

Die Erfindung bezieht sich auf ein Formwerkzeug zum Herstellen von flachen Körpern aus härtbaren Reaktionsharzen, bestehend aus einer Grundplatte und einer Deckplatte, welche relativ zueinander bewegbar sind, wobei zwischen Grundplatte und Deckplatte eine zusammendrückbare, den Formhohlraum begrenzende, teilweise in eine Nut eingelassene Dichtung angeordnet ist, welche Durchführungen zum Einbringen und Ausbringen von Stoffen in bzw. aus dem Formhohlraum aufweist

Ein solches Formwerkzeug ist aus DE-C2 3 016 061 bekannt. Dort bestehen die Durchführungen aus Kanülen von Injektionsspritzen, wobei die Kanülen nach der Füllung des Formhohlraumes wieder herausgezogen werden. Durch die Elastizität der Dichtung verschließen sich die Löcher von selbst. Die Dichtung verschleißt schnell und da die Durchströmquerschnitte der Kanülen möglichst klein gehalten werden müssen, dauert das Füllen und Entlüften entsprechend lange.

Es besteht die Aufgabe, das Formwerkzeug der eingangs genannten Art dahingehend zu verbessern, daß die Dichtung geschont wird und daß das Füllen bzw. Entlüften des Formhohlraumes schneller durchführbar ist.

Diese Aufgabe wird dadurch gelöst, daß die Durchführungen jeweils aus einem festangeordneten Kapillarrohr, welches teilweise in die Dichtung hineinragt und einem daran anschließenden in den Formhohlraum mündenden Kanal bestehen, und daß den Kanälen einschiebbare Verschlußnadeln zugeordnet sind.

Erst dieser Aufbau des Formwerkzeuges ermöglicht einen wirtschaftlichen Produktionsablauf. Es versteht sich, daß die Dichtung trotz der eingelagerten Kapillarrohre so nachgiebig sein muß, daß die Volumenkontraktion des in der Herstellung begriffenen Körpers beim Aushärten durch die Schwindung in axialer Richtung kompensiert werden kann, wobei in der Regel die Deckplatte entsprechend nachgeführt wird, damit sie mit der Masse stets Kontakt behält. Die Kapillarrohre können größeren Durchmesser aufweisen als die vorbekannten Kanülen, so daß der Füll-und Entlüftungsvorgang schneller abläuft. Wegen ihrer stationären Anordnung besitzen sie wesentlich längere Lebensdauer. Da die Kanäle in der Dichtung durch Einschieben einer Verschlußnadel nicht nur gegen die im Formhohlraum befindliche Masse abgedichtet, sondern auch gleichzeitig von der Masse gereinigt werden, wird die Dichtung geschont und besitzt erheblich längere Lebensdauer Die Verschlußnadel füllt den Kanal vorzugsweise jeweils ganz aus, d.h. sie reicht in Verschlußstellung bis an die den Formhohlraum begrenzende Fläche der Dichtung. Das Formwerkzeug ist besonders geeignet für die Herstellung von Platten als Substrat für optische Datenspeicher. Möchte man optische Datenspeicherplatten mit Vorinformationen herstellen, z.B. Formatierung bzw pregrooves, so bringt man auf der Deckplatte und/oder Grundplatte eine Matrize aus Metall oder einem Polymer an.

Vorzugsweise wird die Dicke der herzustellenden flachen Körper durch exakt reproduzierbare Dosierung der Reaktionsharzmasse vorbestimmt.

Dies ist dank der stationär angeordneten Kapillarrohre möglich.

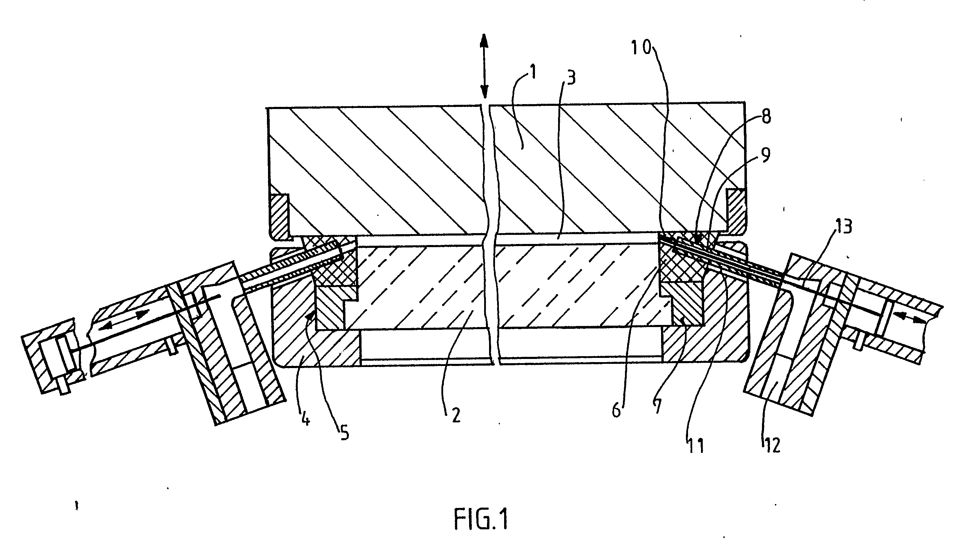

In der Zeichnung ist das neue Formwerkzeug in einem Ausführungsbeispiel im Schnitt rein schematisch dargestellt und nachstehend näher erläutert:

Das Formwerkzeug besteht aus einer Grundplatte 1 aus Metall und einer senkrecht dazu bewegbaren Deckplatte 2 aus strahlungsdurchlässigem Material oder aus Metall, wenn mit nicht strahlungshärtbaren Zweikomponenten-Reaktionsharz-Systemen gearbeitet werden soll. Dazwischen ist ein Formhohlraum 3 eingeschlossen. Die Deckplatte 2 ist in einem ringförmigen Rahmen 4 gelagert, wobei in radialer Richtung zwischen der Deckplatte 2 und dem Rahmen 4 in der so gebildeten Nut 5 eine Dichtung 6 aus einem fluorhaltigen, elastischen Polymer angeordnet ist Unter der Dichtung 6 ist ein Stahlring 7 in der Nut 5 angeordnet. In der Dichtung 6 sind Durchführungen 8 angeordnet, durch welche der Formhohlraum 3 entlüftet und mit Material beschickt werden kann. Diese Durchführungen 8 bestehen aus einem Kapillarrohr 9, welches teilweise in die Dichtung 6 hineinragt und einem daran anschließenden, in den Formhohlraum 3 mündenden Kanal 10. Die Kapillarrohre 9 sind durch Bohrungen 11 im Rahmen 4 nach außen geführt, welche so groß dimensioniert sind, daß beim Verformen der Dichtung 6 die Kapillarrohre 9 nicht anstoßen, falls sie sich bewegen. Die Kapillarrohre 9 enden in Zuführungen 12 für die Reaktionsharze Durch diese Zuführungen 12 kann vorher entlüftet werden oder ein Teil der Durchführungen 8 dient zum Entlüften und ein Teil zum Einführen der Reaktionsharze. Hydraulisch bewegbare Verschlußnadeln 13 sind axial zu den Durchführungen 8 gelagert und lassen sich bis in die Kanäle 10 vorschieben (links offene, rechts geschlossene Darstellung).

Die Arbeitsweise ist folgende: Bei geschlossenem Formwerkzeug wird durch die Durchführungen 8 bei zurückgezogenen Verschlußnadeln 13 (linke Darstellung) aushärtbares Reaktionsharz in den Formhohlraum 3 eingeführt und gleichzeitig entlüftet Nachdem die notwendige Menge an Masse eingebracht worden ist, werden die Verschlußnadeln 13 in die Durchführungen 8 eingeschoben (rechte Darstellung) und das Aushärten der Masse durch sichtbares oder vorzugsweise UV-Licht oder andere Energien initiiert und/oder unterstützte

Strahlungsenergiequellen werden unterhalb der bewegbaren Deckplatte 2 angeordnet, andere konventionelle Energiequellen werden über die Grundplatte 1 wirksam Eine bevorzugte Ausführung ist die Anwendung mehrerer Energiearten gleichzeitig. Die Deckplatte 2 wird beim Aushärten in exakt dem gleichen Maß nachgeführt, wie die Masse in dieser Richtung schwindet, so daß die Deckplatte 2 stets an der Masse anliegt. Die Dicke der herzustellenden flachen Körper wird durch eine exakt reproduzierbare Dosierung erreicht Dadurch erübrigt sich ein die Dicke bestimmender Anschlag. Nach dem Aushärten läßt sich der flache Körper entformen.

## Ansprüche

1. Formwerkzeug zum Herstellen von flachen Körpern aus härtbaren Reaktionsharzen, bestehend aus einer Grundplatte (1) und einer Deckplatte (2), welche relativ zueinander bewegbar sind, wobei zwischen Grundplatte (1) und Deckplatte (2) eine zusammendrückbare, den Formhohlraum (3) begrenzende, teilweise in eine Nut (5) eingelassene Dichtung (6) angeordnet ist, welche Durchführungen (8) zum Einbringen und Ausbringen von Stoffen in bzw. aus dem Formhohlraum (3) aufweist, dadurch gekennzeichnet, daß die Durchführungen (8) jeweils aus einem festangeordneten Kapillarrohr (9), welches teilweise in die Dichtung (6) hineinragt und einem daran anschließenden in den Formhohlraum (3) mündenden Kanal (10) bestehen und daß den Kanälen (10) einschiebbare Verschlußnadeln (13) zugeordnet sind

2. Formwerkzeug nach Anspruch 1, dadurch gekennzeichnet, daß die Dicke der herzustellenden flachen Körper durch exakt reproduzierbare Dosierung der Reaktionsharzmasse vorbestimmt wird.

FIG.1

EP 0 387 651 A2